# EUROPEAN PATENT APPLICATION

(11) **EP 4 344 234 A1**
(43) Date of publication of application: **27.03.2024**
(21) Application number: 22871106.5
(22) Date of filing: 03.11.2022
(51) Int. Cl.: H04N 21/4788, G06F 3/16

(54) **LIVE BROADCAST ROOM PRESENTATION METHOD AND APPARATUS, AND ELECTRONIC DEVICE AND STORAGE MEDIUM**

(30) Priority: 27.07.2022 CN 202210893858
(71) Applicant: Beijing Zitiao Network Technology Co., Ltd., Beijing 100190 (CN)
(72) Inventor: HE, Xiang, Beijing 100086 (CN); WANG, Can, Beijing 100086 (CN); ZHAO, Yan, Beijing 100086 (CN)
(74) Representative: Dentons UK and Middle East LLP
(86) International application number: PCT/CN2022/129461
(87) International publication number: WO 2024/021353

(57) **Abstract**

Provided are a display method and apparatus of a live broadcast room, an electronic device, and a storage medium. The method includes displaying the live broadcast room in a first client in response to a viewing trigger operation for the live broadcast room of the first client and displaying a remote manipulation virtual object in the live broadcast room displayed in the first client in response to determining that the remote manipulation virtual object created by a second client for the live broadcast room exists.

## Description

This application claims priority to Chinese Patent Application No. 202210893858.X filed with the China National Intellectual Property Administration (CNIPA) on Jul. 27, 2022, the disclosure of which is incorporated herein by reference in its entirety.

### TECHNICAL FIELD

Embodiments of the present disclosure relate to the field of computer technology, for example, a display method and apparatus of a live broadcast room, an electronic device, and a storage medium.

### BACKGROUND

With the development of Internet technology, an online live broadcast is more and more popular with users. The remote information interaction between a live broadcast and the audience can be implemented through the online live broadcast.

In the related art of an online live broadcast, a user can interact in a live broadcast room only through the form of text information or the trigger of a fixed animation. Furthermore, in many cases, the user can see only the interaction information of the user. As a result, the interaction form in the live broadcast room is relatively single and lacks interest.

### SUMMARY

The present disclosure provides a display method and apparatus of a live broadcast room, an electronic device, and a storage medium to enrich the display form of the live broadcast room, increase the interest of the live broadcast room, and improve the user experience.

In a first aspect, an embodiment of the present disclosure provides a display method of a live broadcast room. The method includes the steps below.

The live broadcast room is displayed in a first client in response to a viewing trigger operation for the live broadcast room of the first client.

A remote manipulation virtual object is displayed in the live broadcast room displayed in the first client in response to determining that the remote manipulation virtual object created by a second client for the live broadcast room exists.

In a second aspect, an embodiment of the present disclosure provides a display apparatus of a live broadcast room. The apparatus includes a live broadcast room trigger module and a live broadcast room display module.

The live broadcast room trigger module is configured to display the live broadcast room in the first client in response to the viewing trigger operation for the live broadcast room of the first client.

The live broadcast room display module is configured to display the remote manipulation virtual object in the live broadcast room displayed in the first client in response to determining that the remote manipulation virtual object created by the second client for the live broadcast room exists.

In a third aspect, an embodiment of the present disclosure provides an electronic device. The electronic device includes one or more processors and a storage device configured to store the one or more programs.

When executing the one or more programs, the one or more processors perform the display method of a live broadcast room according to any one of embodiments of the present disclosure.

In a fourth aspect, an embodiment of the present disclosure provides a storage medium including computer-executable instructions. When executing the computer-executable instructions, a computer processor is configured to execute the display method of a live broadcast room according to any one of the embodiments of the present disclosure.

### BRIEF DESCRIPTION OF DRAWINGS

Same or similar reference numerals in the drawings denote same or similar elements. It is to be understood that the drawings are illustrative and that originals and elements are not necessarily drawn to scale.
FIG. 1 is a flowchart of a display method of a live broadcast room according to an embodiment of the present disclosure.
FIG. 2 is a flowchart of a display method of a live broadcast room according to an embodiment of the present disclosure.
FIG. 3 is a flowchart of a display method of a live broadcast room according to an embodiment of the present disclosure.
FIG. 4 is a flowchart of a display method of a live broadcast room according to an embodiment of the present disclosure.
FIG. 5 is a flowchart of a display method of a live broadcast room according to an embodiment of the present disclosure.
FIG. 6 is a diagram illustrating the structure of a display apparatus of a live broadcast room according to an embodiment of the present disclosure.
FIG. 7 is a diagram illustrating the structure of an electronic device according to an embodiment of the present disclosure.

### DETAILED DESCRIPTION

It is to be understood that multiple steps recited in the method embodiments of the present disclosure may be executed in a different order, and/or in parallel. In addition, the method embodiments may include additional steps and/or omit execution of illustrated steps. The scope of the present disclosure is not limited in this respect.

As used herein, the term "comprise" and variations thereof are intended to be inclusive, that is, "including, but not limited to". The term "based on" is "at least partially based on". The term "an embodiment" refers to "at least one embodiment". The term "another embodiment" refers to "at least one another embodiment". The term "some embodiments" refers to "at least some embodiments". Related definitions of other terms are given in the description hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" in the present disclosure are intended to be illustrative and not limiting, and that those skilled in the art should understand that "one" or "a plurality" should be understood as "one or more" unless clearly expressed in the context.

The names of messages or information exchanged between multiple apparatuses in embodiments of the present disclosure are only for illustrative purposes and are not intended to limit the scope of such messages or information.

It is to be understood that prior to using the technical solutions disclosed in the multiple embodiments of the present disclosure, a user should be notified of the type, scope of use, use scenario and the like of personal information involved in the present disclosure and authorization from the user should be acquired in an appropriate manner according to relevant laws and regulations.

For example, in response to receiving an active request from a user, prompt information is sent to the user to explicitly notify the user of that the requested operations require obtaining and using the user's personal information. Accordingly, the user can autonomously select whether to provide personal information to software or hardware, such as an electronic device, an application program, a server or a storage medium, for executing the operations of the technical solutions in the present disclosure according to the prompt information.

As an exemplary but non-limiting implementation, in response to receiving the active request from the user, the manner in which the prompt information is sent to the user may be, for example, in the form of a pop-up window in which the prompt information may be presented in the text. In addition, the pop-up window may also carry a selection control for the user to select "agree" or "disagree" to provide personal information to the electronic device.

It is to be understood that the preceding process of notifying the user and acquiring the user's authorization are merely illustrative and do not limit implementations of the present disclosure, and that other manners satisfying relevant laws and regulations may also be applied to the implementations of the present disclosure.

It is understood that data (including, but not limited to, the data itself, the acquisition or use of the data) involved in the technical solutions should comply with the requirements of corresponding laws and regulations and relevant provisions.

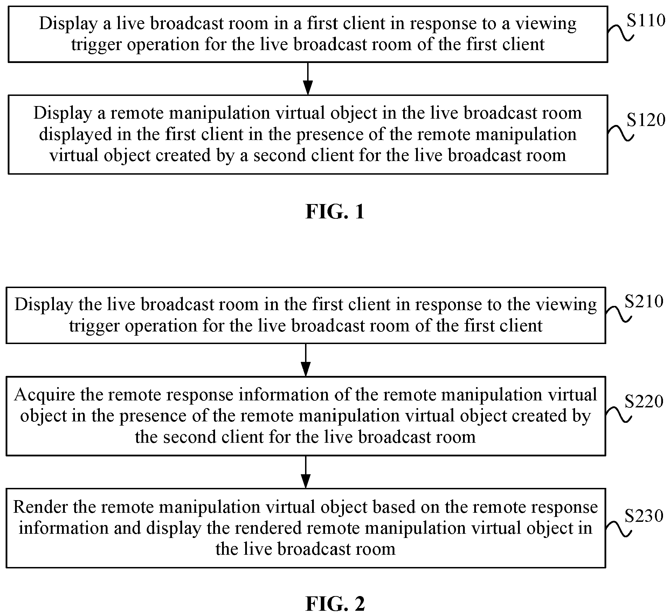

FIG. 1 is a flowchart of a display method of a live broadcast room according to an embodiment of the present disclosure. This embodiment of the present disclosure is applicable to the case where the manipulation virtual object of each user in the live broadcast room is displayed. The method may be executed by a display apparatus of a live broadcast room. The apparatus may be implemented in the form of software and/or hardware. For example, the apparatus may be implemented by an electronic device. The electronic device may be a mobile terminal, a PC terminal, or a server.

As shown in FIG. 1, the method includes the steps below.

In S110, the live broadcast room is displayed in a first client in response to a viewing trigger operation for the live broadcast room of the first client.

The first client may be understood as a local terminal that receives the viewing trigger operation for the live broadcast room and displays the live broadcast room. In this embodiment of the present disclosure, the live broadcast room may be a two-dimensional live broadcast room or a virtual reality live broadcast room. The viewing trigger operation may be understood as a trigger operation that is performed on the first client and used to view the live broadcast room and display the live broadcast room in the first client after being triggered.

Before the viewing trigger operation for the live broadcast room of the first client is responded to, the method further includes receiving the viewing trigger operation for the live broadcast room input from the first client.

In an embodiment, the live broadcast room is a two-dimensional live broadcast room. The viewing trigger operation for the two-dimensional live broadcast room input from the first client may be received in the following manner: A click operation or a long press operation performed on a tab page displayed in the first client and corresponding to the live broadcast room is received after the first client is started. The tag page may include at least one of an anchor image of the live broadcast room, a live broadcast subject image, or live broadcast detailed information.

In another embodiment, receiving the viewing trigger operation for the two-dimensional live broadcast room input from the first client may also be receiving a live broadcast room switch operation used to switch the current live broadcast room and input from the live broadcast room displayed in the first client.

For example, the live broadcast room switch operation used to switch the current live broadcast room and input from the live broadcast room displayed in the first client may be received in the following manners: An exit trigger operation for the current live broadcast room input from the first client is first received (for example, a click operation performed on a return button on the current live broadcast room displayed in the first client is received), and further, the tab page displayed in the first client and corresponding to the live broadcast room is returned based on the exit trigger operation. Then, a click operation or a long press operation performed on a tab page displayed in the first client and corresponding to a target live broadcast room is received to implement the operation of switching from the current live broadcast room to the target live broadcast room. It is to be noted that the current live broadcast room may be understood as a live broadcast room displayed in the first client at the current moment. The target live broadcast room may be understood as a live broadcast room to be displayed in the first client.

If the target live broadcast room is the previous live broadcast room or the next live broadcast room of the current live broadcast room, the live broadcast room switch operation used to switch the current live broadcast room and input from the live broadcast room displayed in the first client may be received in the following manner: A sliding trigger operation (for example, from top to bottom or from bottom to top) performed on the current live broadcast room displayed in the first client is received to display the live broadcast room displayed in the first client from the current live broadcast room to the previous live broadcast room or the next live broadcast room of the current live broadcast room.

In another embodiment, the live broadcast room is a three-dimensional live broadcast room. The viewing trigger operation for the virtual reality live broadcast room input from the first client may be received in the following manner: A selection instruction for a tab page corresponding to the virtual reality live broadcast room is received based on the first client. The selection instruction may be an instruction generated after selecting a tag page displayed in a virtual reality scenario and corresponding to the virtual reality live broadcast room by manipulating a virtual device. The tag page displayed in the virtual reality scenario and corresponding to the virtual reality live broadcast room may be selected in the following manner by manipulating the virtual device: A selection graphic (for example, a selection box) used to select the tag page is displayed in a virtual reality scenario by manipulating the virtual device, and after the manipulation information of the manipulation for the selection graphic is acquired, the selection graphic is manipulated based on the manipulation information to select the tab page displayed in the virtual reality scenario and corresponding to the virtual reality live broadcast room. The manipulation information of the manipulation for the selection graphic may be generated based on the information of the manipulation for the virtual device.

It is to be noted that if the number of tag pages corresponding to the live broadcast room is large, to improve the user experience, the preset number of tag pages may be displayed in the form of tag scrolling. The direction of tag scrolling may be configured according to actual requirements, for example, scrolling from top to bottom, scrolling from bottom to top, scrolling from left to right, or scrolling from right to left. The preset number may be one or more. It is to be understood that the maximum value of the preset number may be determined according to the range of a display region in the first client for displaying the tag page.

On this basis, whether the live broadcast room is a two-dimensional live broadcast room or a virtual reality live broadcast room, the viewing trigger operation for the live broadcast room input from the first client may be received in the following manner: A voice instruction that is input based on the first client and used to view the two-dimensional live broadcast room is received. The voice instruction carries the identifier of the live broadcast room. The identifier of the live broadcast room may include at least one of the room number of the live broadcast room, the anchor identifier of the live broadcast room, or live broadcast subject information. In this manner, the live broadcast room may be quickly accessed by voice control.

In this embodiment of the present disclosure, in the case where the live broadcast room is a virtual reality live broadcast room, the live broadcast room may be displayed in the first client in the following manners: A virtual reality video corresponding to the live broadcast room is acquired, and the virtual reality video is displayed in the live broadcast room.

The virtual reality video is a video obtained by combining virtual reality and a live broadcast. Compared with video viewing in the related art, the virtual reality video enables the audience to come to the scene in person and experience all-around in real time.

For example, after the viewing trigger operation for the live broadcast room in the first client is received, the video stream of the virtual reality video corresponding to the live broadcast room may be acquired. After the video stream is acquired, the video stream is parsed. In this manner, the virtual reality video corresponding to the live broadcast room may be obtained. Then, the parsed virtual reality video is played in the live broadcast room, so that the user watches the virtual reality video in the live broadcast room based on the first client.

In S120, a remote manipulation virtual object is displayed in the live broadcast room displayed in the first client in the presence of the remote manipulation virtual object created by a second client for the live broadcast room.

The second client may be understood as another client other than the first client that belongs to the same live broadcast room as the first client. It is to be noted that the first client may be understood as a local client, and the second client may be understood as a remote client. For different clients, the local client and the remote client are relative, so the first client and the second client are also relative. In this embodiment of the present disclosure, there may be one, two, or more second clients. The remote manipulation virtual object may be understood as a virtual image (Avatar) displayed in the live broadcast room of the first client and manipulated by the second client. In this embodiment of the present disclosure, to satisfy the personalized requirements of the user, the specific representation form of the remote manipulation virtual object may be selected or configured according to the actual requirements of the user, which is not limited in this embodiment, such as a two-dimensional virtual image or a three-dimensional virtual image. The representation form of the virtual image may be configured according to actual requirements, such as a character, an animal, a plant, or other set interaction objects. This is not limited in this embodiment. In this embodiment of the present disclosure, the remote manipulation virtual object may be manipulated according to actual requirements, so that the remote manipulation virtual object performs a specific response action. For example, the remote manipulation virtual object is a three-dimensional character, and manipulation on the remote manipulation virtual object may be performed to manipulate the three-dimensional character to raise and wave hands. The correspondence between the second client and the remote manipulation virtual object may be one-to-one or one-to-many.

In this embodiment of the present disclosure, there are multiple methods for creating the remote manipulation virtual object, and the specific creation method is not limited herein. For example, a selection instruction for a created remote manipulation virtual object may be received, and a remote manipulation virtual object to be selected is determined based on the selection instruction. Alternatively, a default remote manipulation virtual object is acquired, and the default remote manipulation virtual object is used as a required remote manipulation virtual object. Alternatively, image data uploaded by the user is received, and the remote manipulation virtual object is generated based on the image data. For example, two-dimensional image data used to be uploaded is received. A three-dimensional model is generated based on the two-dimensional image data. The generated three-dimensional model is used as the remote manipulation virtual object to make the remote manipulation virtual object stereoscopic.

For example, after the first client receives the data identifying the created remote manipulation virtual object broadcast by the second client, the received data is rendered. Further, the remote manipulation virtual object corresponding to the second client may be obtained, and the remote manipulation virtual object is displayed in the live broadcast room displayed in the first client.

In the technical solutions provided by this embodiment of the present disclosure, the live broadcast room is displayed in the first client in response to the viewing trigger operation for the live broadcast room in the first client. Then, the remote manipulation virtual object is displayed in the live broadcast room displayed in the first client in the presence of the remote manipulation virtual object created by the second client for the live broadcast room, so that the remote manipulation virtual object created by the second client can be displayed in the live broadcast room displayed in the first client. In this manner, the user of the first client can not only see the information of the local terminal but also know the information of other clients, thereby avoiding the single display form of the live broadcast room existing in the related art and enriching the interaction presentation form of the live broadcast room. Moreover, the interest of the live broadcast room is increased, and the user experience is improved.

FIG. 2 is a flowchart of a display method of a live broadcast room according to an embodiment of the present disclosure. Based on the preceding embodiment, this embodiment provides a method for displaying the remote manipulation virtual object created by the second client in the live broadcast room displayed in the first client. For example, the remote manipulation virtual object is displayed in the live broadcast room displayed in the first client in the following manner: The remote response information of the remote manipulation virtual object is acquired, the remote manipulation virtual object is rendered based on the remote response information, and the rendered remote manipulation virtual object is displayed in the live broadcast room displayed in the first client. The remote response information is determined according to the remote manipulation information for a remote control point corresponding to the remote manipulation virtual object. Technical features identical to or corresponding to the preceding embodiment are not repeated here.

As shown in FIG. 2, the method of this embodiment may include the steps below.

In S 120, the live broadcast room is displayed in the first client in response to the viewing trigger operation for the live broadcast room of the first client.

In S220, the remote response information of the remote manipulation virtual object is acquired in the presence of the remote manipulation virtual object created by the second client for the live broadcast room.

The remote response information is determined based on the remote manipulation information acting on the remote control point corresponding to the remote manipulation virtual object. In other words, the remote response information may be understood as presented information in response to the remote manipulation information of the remote control point corresponding to the remote manipulation virtual object. The remote control point may be understood as a point position used for controlling the remote manipulation virtual object according to the input remote manipulation information. The remote control point may be understood as a control point corresponding to the second client. For example, the remote control point may be a remote control device, such as a control handle and/or a control button. The remote manipulation information may include an operation method for the remote control point and a controlled position acting on the remote manipulation virtual object by the remote control point.

For example, the remote response information may include at least one of object action information, object position information, or scenario interaction information of the remote manipulation virtual object. The object action information may be understood as the action information of the remote manipulation virtual object. The object position information may be understood as the position information of the remote manipulation virtual object. The object position information may be relative position information. For example, the object position information may be determined according to the moving direction and the moving distance of the current position relative to the previous position. The object position information may also be absolute position information, such as the coordinate information of the remote manipulation virtual object. The scenario interaction information may be mounting information mounted on the remote manipulation virtual object. The mounting information may be information associated with the remote manipulation virtual object. For example, the mounting information may be at least one of object identifier information or information such as the residence time and interaction level of the remote manipulation object in the live broadcast room. The scenario interaction information may also be interaction information between interaction objects associated with the live broadcast scenario in the live broadcast room. The interaction objects associated with the live broadcast scenario in the live broadcast room may be configured according to actual requirements. The interaction relationship and the interaction method thereof may be presented. The specific interaction method is not limited herein. For example, the remote manipulation virtual object is a virtual character image, and an interaction object may be a boat on which the virtual character image may ride. The virtual character image may travel with the boat after boarding.

In an example of the present disclosure, the remote response information of the remote manipulation virtual object is acquired in the following manner: The remote response information of the remote manipulation virtual object pushed by the second client is received. For example, when the remote response information of the remote manipulation virtual object broadcast by the second client is detected, the remote response information of the remote manipulation virtual object broadcast by the second client is received. In this manner, when the remote response information broadcast by the second client is received, the received remote response information can be rendered in time, so that the remote manipulation virtual object of the second client may be displayed in the live broadcast room displayed in the first client in real time.

For example, the remote response information of the remote manipulation virtual object is acquired in the following manners: The remote response information of the remote manipulation virtual object pushed by the second client is received, and the remote response information of the remote manipulation virtual object is buffered to a target buffer space; and if a preset information acquisition condition is satisfied, the remote response information is acquired from the target buffer space.

The target buffer space may be a pre-configured buffer space configured to store the remote response information. The size of the target buffer space may be dynamically configured according to actual requirements to optimize system resource configuration. The advantage of buffering the remote response information of the remote manipulation virtual object to the target buffer space is that the live broadcast effect and the smooth degree of the live broadcast are ensured when a network is unstable to the avoid phenomenon that the live broadcast is interrupted once the network is unstable. In this embodiment of the present disclosure, the preset information acquisition condition may be understood as a pre-configured condition used to determine whether to acquire the remote response information of the remote manipulation virtual object from the target buffer space. For example, the preset information acquisition condition includes at least one of the items below.

The remote response information is buffered to the target buffer space.

It is detected that the time interval between the current time and the previous time at which the remote response information is acquired reaches a preset interval duration threshold.

An information acquisition trigger operation used to acquire the remote response information is received.

For example, the information acquisition trigger operation may include a refresh operation and/or a network recovery connection operation.

For example, it is to be understood that the remote response information of the remote manipulation virtual object pushed by the second client may be received in the following manner: The remote response information is broadcast over Ethernet after the second client generates the remote response information of the remote manipulation virtual object. After the first client receives the remote response information broadcast by the second client, the remote response information received by the first client may be buffered to the target buffer space. When the information acquisition condition is satisfied, the action information and/or the position information of the remote manipulation virtual object are acquired from the target buffer space.

In S230, the remote manipulation virtual object is rendered based on the remote response information and the rendered remote manipulation virtual object is displayed in the live broadcast room displayed in the first client.

For example, after the remote response information is obtained, the animation data of the remote manipulation virtual object may be generated based on the remote response information. After the animation data of the remote manipulation virtual object is generated, the animation data corresponding to the remote manipulation virtual object may be bound on the remote manipulation virtual object. After the animation data is bound, the remote manipulation virtual object on which the animation data is bound may be rendered. In this manner, a rendered animatable remote manipulation virtual object may be obtained. Moreover, the rendered animatable remote manipulation virtual object is displayed in the live broadcast room displayed in the first client.

In the technical solutions provided by this embodiment of the present disclosure, the remote response information of the remote manipulation virtual object is acquired. The remote response information is determined according to the remote manipulation information for the remote control point corresponding to the remote manipulation virtual object. In this manner, the remote manipulation virtual object may be rendered based on the remote response information and the rendered remote manipulation virtual object is displayed in the live broadcast room displayed in the first client. The remote manipulation virtual object displayed in the first client is controlled by the second client, so that the interaction information of the second client can be synchronized. An interaction scenario of multi-party watching in the live broadcast room is truly displayed in the first client, thereby maximizing the restoration of a scene and enriching the display form of the live broadcast room.

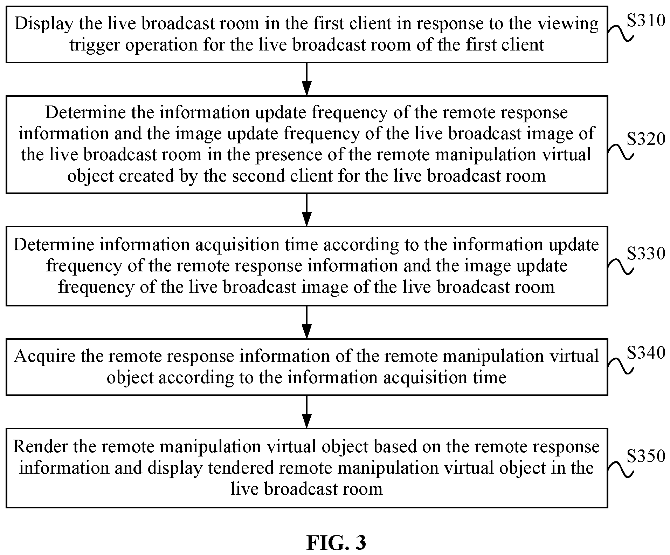

FIG. 3 is a flowchart of a display method of a live broadcast room according to an embodiment of the present disclosure. Based on the preceding embodiments, this embodiment provides a method for acquiring the remote response information of the remote manipulation virtual object. For example, the remote response information of the remote manipulation virtual object is acquired in the following manners: The information acquisition time is determined according to the information update frequency of the remote response information and the image update frequency of the live broadcast image of the live broadcast room; and the remote response information of the remote manipulation virtual object is acquired according to the information acquisition time. Technical features identical to or corresponding to the preceding embodiments are not repeated here.

As shown in FIG. 3, the method of this embodiment may include the steps below.

In S310, the live broadcast room is displayed in the first client in response to the viewing trigger operation for the live broadcast room of the first client.

In S320, the information update frequency of the remote response information and the image update frequency of the live broadcast image of the live broadcast room are determined in the presence of the remote manipulation virtual object created by the second client for the live broadcast room.

The information update frequency may be understood as the number of updates of the remote response information per unit time. It is to be noted that an information update may be the replacement for the previously acquired remote response information or the addition of new remote response information. The image update frequency may be understood as the number of updates of the live broadcast image per unit time. It is to be noted that the information update frequency and the image update frequency may be pre-configured according to actual requirements. The information update frequency and the image update frequency may be the same or different.

For example, a pre-configured configuration file for the live broadcast room is read and parsed in the presence of the remote manipulation virtual object created by the second client for the live broadcast room. In this manner, the information update frequency of the remote response information and the image update frequency of the live broadcast image of the live broadcast room may be obtained. The configuration file stores the information update frequency of the remote response information and the image update frequency of the live broadcast image of the live broadcast room.

In S330, the information acquisition time is determined according to the information update frequency of the remote response information and the image update frequency of the live broadcast image of the live broadcast room.

The information acquisition time may be understood as the time when the live broadcast room displayed in the first client acquires the remote response information of the second client. An information update cycle may be determined based on the information update frequency of the remote response information. The information update cycle may be the time interval of the reception time or the broadcast time of two adjacent groups of the remote response information.

In this embodiment of the present disclosure, in the case where the information update frequency of the remote response information is the same as the image update frequency of the live broadcast image of the live broadcast room, it is represent that the number of frames of the remote response information of the remote manipulation virtual object is the same as the number of frames of the live broadcast image and corresponds to the number of frames of the live broadcast image in a one-to-one manner. At this time, the information acquisition time may be determined based on the information update frequency or the image update frequency.

In the case where the information update frequency of the remote response information is higher than the image update frequency of the live broadcast image of the live broadcast room, it is represent that the number of frames of the remote response information of the remote manipulation virtual object is more than the number of frames of the live broadcast image. Then, a frame of the remote response information corresponding to the live broadcast image of the live broadcast room may be matched from multiple frames of the remote response information of the remote manipulation virtual object. Thus, the information acquisition time is determined based on the image update frequency of the live broadcast image of the live broadcast room.

In the case where the information update frequency of the remote response information is less than the image update frequency of the live broadcast image of the live broadcast room, to avoid the phenomenon of unsmoothness or a lag in the operation of the remote manipulation object in the live broadcast image and to avoid a black screen due to an unstable network, for example, the information acquisition time is determined according to the information update frequency of the remote response information and the image update frequency of the live broadcast image in the live broadcast room in the following manner: In the case where the information update frequency of the remote response information is less than the image update frequency of the live broadcast image of the live broadcast room, a delay time is determined according to the information update cycle of the remote response information, and the information acquisition time is determined according to the delay time.

In this embodiment of the present disclosure, the information update frequency of the remote response information is less than the image update frequency of the live broadcast image of the live broadcast room. It is represented that the image playing speed of the live broadcast room is faster than the update speed of the remote response information.

For example, in the case where the information update frequency of the remote response information is less than the image update frequency of the live broadcast image of the live broadcast room, the information update cycle of the remote response information may be determined according to the information update frequency of the remote response information. Then, the delay time of the live broadcast image may be calculated according to the information update cycle. In this manner, the information acquisition time is determined based on the current time and the delay time of the current live broadcast image. For example, the information acquisition time is a time point after the current time of the current live broadcast image passes the delay time of the current live broadcast image. For example, the delay time of the live broadcast image is not less than one information update cycle. For example, the delay time may be one or more information update cycles.

In S340, the remote response information of the remote manipulation virtual object is acquired according to the information acquisition time.

For example, after the information acquisition time is determined, the remote response information of the remote manipulation virtual object may be acquired from the target buffer space configured to store the remote response information based on the information acquisition time.

In S350, the remote manipulation virtual object is rendered based on the remote response information and the rendered remote manipulation virtual object is displayed in the live broadcast room displayed in the first client.

In this embodiment of the present disclosure, the information acquisition time is determined according to the information update frequency of the remote response information and the image update frequency of the live broadcast image of the live broadcast room. Then, the remote response information of the remote manipulation virtual object may be acquired according to the information acquisition time. In this manner, the smoothness of the live broadcast image is improved, and the phenomenon of an image lag or a black screen is avoided. Thus, the user experience is improved.

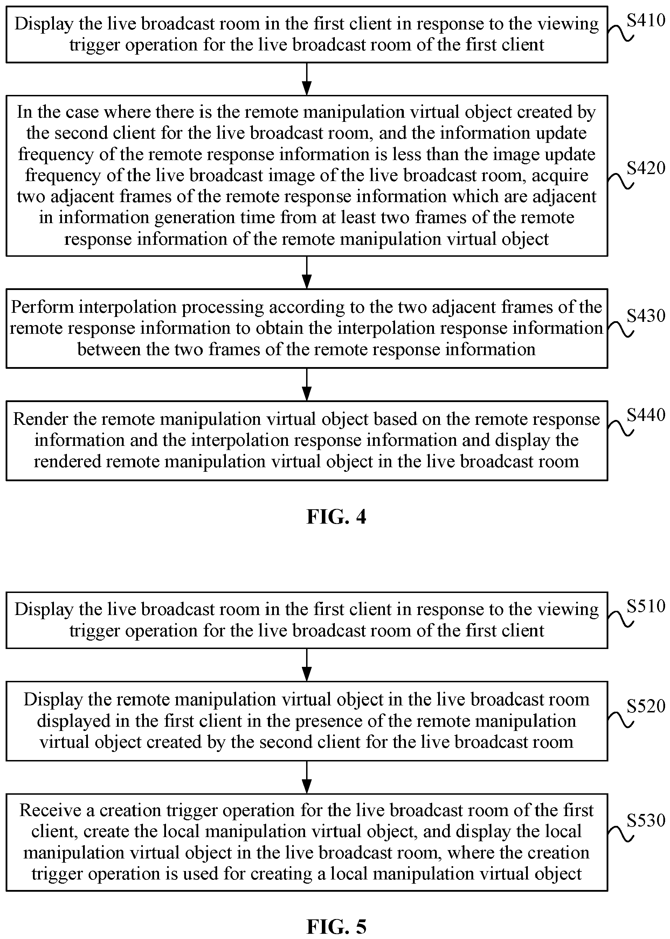

FIG. 4 is a flowchart of a display method of a live broadcast room according to an embodiment of the present disclosure. This embodiment is based on the preceding embodiments. For example, the remote response information of the remote manipulation virtual object is acquired, and the remote manipulation virtual object is rendered based on the remote response information and the rendered remote manipulation virtual object is displayed in the live broadcast room displayed in the first client in the following manners: In the case where the information update frequency of the remote response information is less than the image update frequency of the live broadcast image of the live broadcast room, two adjacent frames of the remote response information which are adjacent in information generation time are acquired from at least two frames of the remote response information of the remote manipulation virtual object; interpolation processing is performed according to the two adjacent frames of the remote response information to obtain the interpolation response information located between the two frames of the remote response information; and the remote manipulation virtual object is rendered based on the remote response information and the interpolation response information and the rendered remote manipulation virtual object is displayed in the live broadcast room displayed in the first client. Technical features identical to or corresponding to the preceding embodiments are not repeated here.

As shown in FIG. 4, the method of this embodiment may include the steps below.

In S410, the live broadcast room is displayed in the first client in response to the viewing trigger operation for the live broadcast room of the first client.

In S420, in the case where there is the remote manipulation virtual object created by the second client for the live broadcast room, and the information update frequency of the remote response information is less than the image update frequency of the live broadcast image of the live broadcast room, two adjacent frames of the remote response information which are adjacent in the information generation time are acquired from at least two frames of the remote response information of the remote manipulation virtual object.

The information generation time may be understood as the time when the remote response information is generated.

For example, in the case where there is the remote manipulation virtual object created by the second client for the live broadcast room, and the information update frequency of the remote response information is less than the image update frequency of the live broadcast image of the live broadcast room, the information generation time of multiple frames of the remote response information of the remote manipulation virtual object may be determined. Then, two adjacent frames of the remote response information which are adjacent in the information generation time may be acquired from multiple frames of the remote response information of the remote manipulation virtual object according to the sequence of multiple information generation times.

It is to be noted that, in view that information transmission needs to depend on factors such as a network, two adjacent frames of the remote response information which are adjacent in reception time may be adjacent or not adjacent in the information generation time. For this reason, in this embodiment of the present disclosure, adjacent remote response information is determined according to the information generation time, so that the remote response information of the remote manipulation virtual object in time series can be accurately reflected, and the display effect of the remote manipulation virtual object can be better ensured to be consistent with the remote control information, thereby avoiding the confusion in the display order of the actions of the remote manipulation virtual object displayed in a first live broadcast room.

In S430, interpolation processing is performed according to two adjacent frames of the remote response information to obtain the interpolation response information located between the two frames of the remote response information.

The interpolation response information may be understood as information of all intermediate frames generated between two adjacent frames of the remote response information. The number of interpolation response information may be one, two, or more. In this embodiment of the present disclosure, interpolation processing is performed according to two adjacent frames of the remote response information. In this manner, not only the smoothness of the live broadcast image can be improved, but also the visual quality can be enhanced, so that the user can obtain an excellent experience effect.

For example, after the two adjacent frames of the remote response information are acquired, the two adjacent frames of the remote response information may be analyzed. Then, the position information and the action information of the remote manipulation virtual object included in each of two adjacent remote response information may be determined. Further, interpolation processing may be performed between the two adjacent frames of the remote response information based on a preset interpolation algorithm according to the position information and the action information included in the two adjacent frames of the remote response information. In this manner, the interpolation response information located between the two frames of the remote response information may be obtained. The preset interpolation algorithm may be a linear interpolation algorithm or a non-linear interpolation algorithm. For example, the non-linear interpolation algorithm may be a quadratic function interpolation method or a cubic function interpolation method.

It is to be noted that there are many methods for performing interpolation between two adjacent frames of the remote response information, and the interpolation method is not limited herein.

In an exemplary embodiment of this embodiment of the present disclosure, the interpolation response information of a preset interpolation quantity may be interpolated between two adjacent frames of the remote response information based on the preset interpolation quantity. It is to be noted that the interval time between the interpolation response information of the preset interpolation quantity interpolated between the two adjacent frames of the remote response information may be the same or different.

In another exemplary embodiment of this embodiment of the present disclosure, after the two adjacent frames of the remote response information are obtained, difference comparison may be performed on the two adjacent frames of the remote response information. Then, the interpolation response information may be interpolated between the two adjacent frames of the remote response information according to the difference comparison result, and interpolation processing may be dynamically performed between the two adjacent frames of the remote response information, thereby improving the interpolation effect.

For example, after the difference comparison result is obtained, a target difference interval in which the difference comparison result is located in multiple preset difference intervals may be determined. Then, a target interpolation quantity corresponding to the target difference interval may be determined based on the correspondence between the multiple preset difference intervals and an interpolation quantity. Further, the interpolation response information of the target interpolation quantity may be interpolated between the two adjacent frames of the remote response information. The target difference interval may be understood as a difference interval in which the difference comparison result is located in the multiple preset difference intervals. The target interpolation quantity may be understood as an interpolation quantity corresponding to the target difference interval. In this embodiment of the present disclosure, a corresponding interpolation quantity is set for each preset difference interval. It is to be noted that the interpolation quantity set for each preset difference interval may be preseted according to experience.

In another exemplary embodiment of this embodiment of the present disclosure, the movement track of the remote manipulation virtual object between the two adjacent frames of the remote response information may be obtained first according to the position information and the action information of the remote manipulation virtual object included in each of the two adjacent remote response information. Interpolation processing is performed on the two adjacent frames of the remote response information according to the movement track to obtain the interpolation response information located between the two frames of the remote response information.

In S440, the remote manipulation virtual object is rendered based on the remote response information and the interpolation response information and the rendered remote manipulation virtual object is displayed in the live broadcast room displayed in the first client.

For example, after the remote response information and the interpolation response information are obtained, the animation data of the remote manipulation virtual object is generated according to the position information and/or the action information in the remote response information and the interpolation response information. After the animation data of the remote manipulation virtual object is generated, the animation data corresponding to the remote manipulation virtual object may be bound on the remote manipulation virtual object. After the animation data is bound, the remote manipulation virtual object on which the animation data is bound may be rendered. In this manner, the rendered animatable remote manipulation virtual object may be obtained. Moreover, the rendered animatable remote manipulation virtual object is displayed in the live broadcast room displayed in the first client.

In the technical solutions provided by this embodiment of the present disclosure, in the case where the information update frequency of the remote response information is less than the image update frequency of the live broadcast image of the live broadcast room, the two adjacent frames of the remote response information which are adjacent in the information generation time are acquired from at least two frames of the remote response information of the remote manipulation virtual object to ensure the coherence of the actions of the remote manipulation virtual object. Interpolation processing is performed according to the two adjacent frames of the remote response information to obtain the interpolation response information located between the two frames of the remote response information. The remote manipulation virtual object is rendered based on the remote response information and the interpolation response information and the rendered remote manipulation virtual object is displayed in the live broadcast room displayed in the first client. In this manner, the coherence of the actions of the remote manipulation object rendered in the live broadcast image is ensured. Thus, not only the smoothness of the live broadcast image can be improved, but also the visual experience effect can be enhanced.

FIG. 5 is a flowchart of a display method of a live broadcast room according to an embodiment of the present disclosure. Based on the preceding embodiments, this embodiment provides a method for displaying the local manipulation virtual object in the live broadcast room displayed in the first client. For example, the method also includes receiving a creation trigger operation for the live broadcast room of the first client, creating the local manipulation virtual object according to the creation trigger operation, and displaying the local manipulation virtual object in the live broadcast room displayed in the first client, where the creation trigger operation is used for creating a local manipulation virtual object. Technical features identical to or corresponding to the preceding embodiments are not repeated here.

As shown in FIG. 5, the method of this embodiment may include the steps below.

In S510, the live broadcast room is displayed in the first client in response to the viewing trigger operation for the live broadcast room of the first client.

In S520, the remote manipulation virtual object is displayed in the live broadcast room displayed in the first client in the presence of the remote manipulation virtual object created by the second client for the live broadcast room.

In S530, the creation trigger operation for the live broadcast room of the first client is received, where the creation trigger operation is used for creating a local manipulation virtual object. The local manipulation virtual object is created according to the creation trigger operation. The local manipulation virtual object is displayed in the live broadcast room displayed in the first client.

The local manipulation virtual object may be understood as a virtual image displayed in the live broadcast room of the first client and manipulated by the first client. It is to be noted that for different clients, the local manipulation virtual object and the remote manipulation virtual object are relative. For example, the manipulable virtual objects created by client A and client B for a live broadcast room are virtual object a and virtual object b respectively. At this time, for client A, virtual object a is a local manipulation virtual object, and virtual object b is a remote manipulation virtual object. Similarly, for client B, virtual object b is a local manipulation virtual object, and virtual object a is a remote manipulation virtual object. The creation trigger operation may be understood as a trigger operation (such as a click operation and a voice instruction) for creating the local manipulation virtual object of the live broadcast room in the first client.

In this embodiment of the present disclosure, the creation trigger operation for the live broadcast room of the first client may be received where the creation trigger operation is used for creating the local manipulation virtual object, and the local manipulation virtual object may be created in the following manners: After the first client displays the live broadcast room, a click operation acting on the control that is used for creating the local manipulation object and that is on the display interface of the live broadcast room displayed in the first client may be received, and a selectable manipulation virtual object is displayed in the control; and the click operation acting on the selectable manipulation virtual object in the control is received, and the clicked manipulation virtual object is used as the local manipulation virtual object created by the first client for the live broadcast room. Alternatively, the creation trigger operation for the live broadcast room of the first client may be received, where the creation trigger operation is used for creating the local manipulation virtual object, and the local manipulation virtual object may be created in the following manners: After the live broadcast room is entered, a click operation acting on the icon that is used for creating the local manipulation object and that is on the live broadcast interface displayed in the first client is received, and one manipulation virtual object is randomly selected from at least two created manipulation virtual objects based on the click operation, and the manipulation virtual object is used as the local manipulation virtual object created by the first client for the live broadcast room. In addition, the creation trigger operation for the live broadcast room of the first client may be received, where the creation trigger operation is used for creating the local manipulation virtual object, and the local manipulation virtual object may be created in the following manner: An input replication creation operation for the displayed remote manipulation virtual object of the live broadcast room may be received to create the same local manipulation virtual object as the remote manipulation virtual object.

In this embodiment of the present disclosure, for example, the creation trigger operation for the live broadcast room of the first client is received, where the creation trigger operation is used for creating the local manipulation virtual object, and the local manipulation virtual object is created in the following manners: The creation trigger operation for the live broadcast room of the first client is received, and a third-party tool used to create the local manipulation virtual object is loaded based on the trigger operation, where the creation trigger operation is used for creating the local manipulation virtual object. Then, the local manipulation virtual object may be created based on the third-party tool. The local manipulation virtual object may be created in the following manner based on the third-party tool: Three-dimensional point cloud data for creating the manipulation virtual object is acquired through the third-party tool. Thus, a three-dimensional model may be generated based on the three-dimensional point cloud data. Then, the generated three-dimensional model may be used as the local manipulation virtual object. The three-dimensional point cloud data may be stored in the form of a file. The file format for storing the three-dimensional point cloud data is not limited herein and may be, for example, .ply, .txt, .pcd, and .las.

For example, the local manipulation virtual object is displayed in the live broadcast room displayed in the first client in the following manners: The local manipulation information of the manipulation point of the local manipulation virtual object is acquired, and the local response information of the local manipulation virtual object is determined according to the local manipulation information. The local manipulation virtual object is displayed in the live broadcast room displayed in the first client based on the local response information.

The manipulation point of the local manipulation virtual object may be understood as a position point where a virtual device corresponding to the local manipulation virtual object is manipulated in a realistic scenario. The local manipulation information may be understood as location information and/or action information generated by the manipulation of the virtual device in the realistic scenario. The local response information may be understood as information for manipulating the local manipulation virtual object in a virtual scenario. The local response information includes at least one of object action information, object position information, or scenario interaction information.

Similarly, the object action information corresponding to the local response information may be understood as the action information of the local manipulation virtual object. The object position information corresponding to the local response information may be understood as the position information of the local manipulation object. The scenario interaction information may be mounting information mounted on the local manipulation virtual object. The mounting information may be information associated with the local manipulation virtual object and may be, for example, at least one of object identifier information or information such as the residence time and interaction level of the remote manipulation object in the live broadcast room. The scenario interaction information may also be the interaction information between interaction objects associated with the live broadcast scenario in the live broadcast room. The interaction objects associated with the live broadcast scenario in the live broadcast room may be configured according to actual requirements. The interaction relationship and the interaction method thereof may be preseted. The specific interaction method is not limited herein. For example, the local manipulation virtual object is a virtual character image, and an interaction object may be a book that the virtual character image may open. The virtual character image may read the book after opening the book.

In this embodiment of the present disclosure, the local response information of the local manipulation virtual object is determined in the following manner according to the local manipulation information: The object action information and the object position information of the local manipulation virtual object corresponding to the local manipulation information are determined based on a prebuilt local drive of the local manipulation virtual object; and/or the scenario interaction information of the local manipulation virtual object corresponding to the local manipulation information is determined based on a prebuilt scenario object.

The local drive (AvatarDriver) of a local virtual object may be built based on the object action information and the object position information of the local manipulation virtual object corresponding to the local manipulation information. The scenario object (GameObject) may be understood to store the scenario interaction information of the local manipulation virtual object corresponding to the local manipulation information.

In this embodiment of the present disclosure, it is to be understood that the object action information and the object position information of the local manipulation virtual object corresponding to the local manipulation information are determined in the following manner based on the prebuilt local drive of the local manipulation virtual object: After the local manipulation virtual object is created, the local manipulation virtual object may be loaded and initialized. After the initialization is completed, the local drive adapted to the local manipulation virtual object may be determined. Then, the local drive may be loaded. In this manner, the object action information and/or the object position information of the local manipulation virtual object may be extracted through the local drive.

In this embodiment of the present disclosure, it is to be understood that the scenario interaction information of the local manipulation virtual object corresponding to the local manipulation information is determined in the following manner based on the prebuilt scenario object: After the local manipulation virtual object may be loaded and initialized, the scenario object adapted to the local manipulation virtual object may be determined. Then, the scenario interaction information may be read from the scenario object.

For example, after the local response information of the local manipulation virtual object is determined according to the local manipulation information, the method also includes pushing the local response information of the local manipulation virtual object to a client corresponding to the remote manipulation virtual object belonging to the same live broadcast room as the local manipulation virtual object.

For example, after the local response information of the local manipulation virtual object is determined according to the local manipulation information, or when the local response information is monitored, the local response information of the local manipulation virtual object may be broadcast to the Ethernet in the form of a message, and the local response information of the local manipulation virtual object may be transmitted through the data link layer of a broadcast channel. Then, the local response information of the local manipulation virtual object may be transmitted to the client corresponding to the remote manipulation virtual object belonging to the same live broadcast room as the local manipulation virtual object.

For example, to ensure the security of the local response information, the local response information may be encrypted. To avoid a blocking phenomenon in an information broadcasting process, the local response information of the local manipulation virtual object may be broadcast to the Ethernet in the form of a message at a preset broadcast frequency.

To improve the utilization rate of resources, the display method of a live broadcast room according to this embodiment of the present disclosure may also include canceling display of the local manipulation virtual object in the live broadcast room when a first preset destruction condition for the local manipulation virtual object is detected to be satisfied; and/or canceling display of the remote manipulation virtual object in the live broadcast room when a second preset destruction condition for the remote manipulation virtual object is detected to be satisfied.

The first preset destruction condition may be understood as a preset destruction condition for destroying the local manipulation virtual object. The second preset destruction condition may be understood as a preset destruction condition for destroying the remote manipulation virtual object.

For example, when the first preset destruction condition for the local manipulation virtual object is detected to be satisfied, a predefined local destruction interface may be invoked to destroy the local manipulation virtual object in the live broadcast room to cancel the display of the local manipulation virtual object in the live broadcast room. When the second preset destruction condition for the remote manipulation virtual object is detected to be satisfied, a predefined remote destruction interface is invoked to destroy the remote manipulation virtual object in the live broadcast room to cancel the display of the remote manipulation virtual object in the live broadcast room.

It is to be noted that there may be multiple first preset destruction conditions and multiple second preset destruction conditions. This is not limited in this embodiment. The first preset destruction condition and the second preset destruction condition may be the same or different.

For example, the first preset destruction condition may include at least one of the operations below.

It is detected that the continuous display duration of the local manipulation virtual object in the live broadcast room reaches first preset display duration.

It is detected that manipulation interrupt duration in which the local manipulation information of the local manipulation virtual object is not received reaches preset interrupt duration.

A first trigger operation acting on a pre-configured first destruction control for destroying the local manipulation virtual object is received.

The first destruction control may be understood as a control disposed in the live broadcast room for destroying the local manipulation virtual object. The first trigger operation may be a click operation or a press operation acting on the first destruction control.

For example, the second preset destruction condition may include at least one of the operations below.

It is detected that the continuous display duration of the remote manipulation virtual object in the live broadcast room reaches second preset display duration.

It is detected that information loss duration in which the remote response information of the remote manipulation virtual object is not received reaches a preset loss duration.

A second trigger operation acting on a pre-configured second destruction control of the first client for destroying the remote manipulation virtual object is received.

Destruction notification information for destroying the remote manipulation virtual object broadcast by the second client is received.

The second destruction control may be understood as a control displayed in the live broadcast room of the first client for destroying the remote manipulation virtual object. The second trigger operation may be a click operation or a press operation acting on the second destruction control.

The destruction notification information may be generated after the second client receives the second destruction operation for the remote manipulation virtual object.

It is to be noted that the first preset display duration and the second preset display duration may be configured according to actual requirements. Specific values thereof are not limited herein. The first preset display duration and the second preset display duration may be the same or different.

In the technical solutions provided by this embodiment of the present disclosure, the creation trigger operation for the live broadcast room of the first client is received, where the creation trigger operation is used for creating the local manipulation virtual object. The local manipulation virtual object is created. The local manipulation virtual object is displayed in the live broadcast room displayed in the first client. In this manner, the local manipulation virtual object manipulated by the first client is displayed in the live broadcast room displayed in the first client. Thus, an immersive scene is provided for the user, and the user experience is improved.

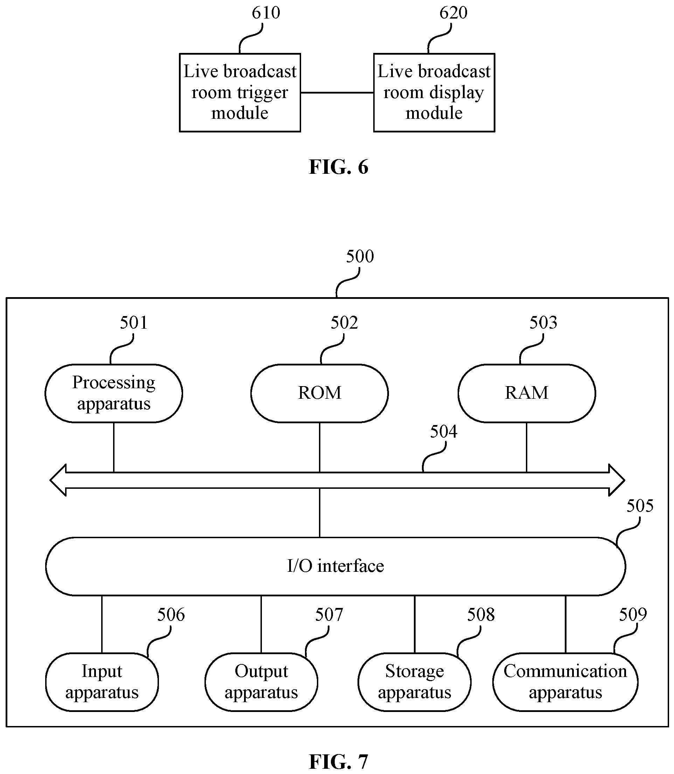

FIG. 6 is a diagram illustrating the structure of a display apparatus of a live broadcast room according to an embodiment of the present disclosure. As shown in FIG. 6, the apparatus includes a live broadcast room trigger module 610 and a live broadcast room display module 620.

The live broadcast room trigger module 610 is configured to display the live broadcast room in the first client in response to the viewing trigger operation for the live broadcast room of the first client. The live broadcast room display module 620 is configured to display the remote manipulation virtual object in the live broadcast room displayed in the first client in the presence of the remote manipulation virtual object created by the second client for the live broadcast room.

In the technical solutions provided by this embodiment of the present disclosure, the live broadcast room is displayed in the first client in response to the viewing trigger operation for the live broadcast room of the first client. Then, the remote manipulation virtual object is displayed in the live broadcast room displayed in the first client in the presence of the remote manipulation virtual object created by the second client for the live broadcast room, so that the remote manipulation virtual object created by the second client can be displayed in the live broadcast room displayed in the first client. In this manner, the user of the first client can not only see the information of the local terminal but also know the information of other clients, thereby avoiding the single display form of the live broadcast room existing in the related art and enriching the interaction presentation form of the live broadcast room. Moreover, the interest of the live broadcast room is increased, and the user experience is improved.

On the basis of the multiple preceding technical solutions, the live broadcast room display module 620 is configured to acquire the remote response information of the remote manipulation virtual object, render the remote manipulation virtual object based on the remote response information, and display the rendered remote manipulation virtual object in the live broadcast room displayed in the first client. The remote response information is determined according to the remote manipulation information acting on the remote control point corresponding to the remote manipulation virtual object.

On the basis of the multiple preceding technical solutions, the live broadcast room display module 620 is configured to receive the remote response information of the remote manipulation virtual object pushed by the second client and buffer the remote response information of the remote manipulation virtual object to the target buffer space; and if the preset information acquisition condition is satisfied, acquire the local response information from the target buffer space.

On the basis of the multiple preceding technical solutions, the live broadcast room display module 620 includes an information acquisition time determination unit and a remote response information acquisition unit.

The information acquisition time determination unit is configured to determine the information acquisition time according to the information update frequency of the remote response information and the image update frequency of the live broadcast image in the live broadcast room. The remote response information acquisition unit is configured to acquire the remote response information of the remote manipulation virtual object according to the information acquisition time.

On the basis of the multiple preceding technical solutions, the information acquisition time determination unit is configured to determine the delay time according to the information update cycle of the remote response information in the case where the information update frequency of the remote response information is less than the image update frequency of the live broadcast image of the live broadcast room and determine the information acquisition time according to the delay time.

On the basis of the multiple preceding technical solutions, the live broadcast room display module 620 is configured to, in the case where the information update frequency of the remote response information is less than the image update frequency of the live broadcast image of the live broadcast room, acquire, from at least two frames of the remote response information of the remote manipulation virtual object, two adjacent frames of the remote response information which are adjacent in the information generation time, perform interpolation processing according to the two adjacent frames of the remote response information to obtain the interpolation response information between the two frames of the remote response information, render the remote manipulation virtual object based on the remote response information and the interpolation response information, and display the rendered remote manipulation virtual object in the live broadcast room displayed in the first client.

On the basis of the multiple preceding technical solutions, the display apparatus of a live broadcast room also includes a local manipulation virtual object display module.

The local manipulation virtual object display module is configured to receive the creation trigger operation for the live broadcast room of the first client, create the local manipulation virtual object according to the creation trigger operation, and display the local manipulation virtual object in the live broadcast room displayed in the first client, where the creation trigger operation is used for creating the local manipulation virtual object.

On the basis of the multiple preceding technical solutions, the local manipulation virtual object display module includes a local response information determination unit and a local manipulation virtual object display unit. The local response information determination unit acquires the local manipulation information of the manipulation point of the local manipulation virtual object and determines the local response information of the local manipulation virtual object according to the local manipulation information. The local response information includes at least one of object action information, object position information, or scenario interaction information. The local manipulation virtual object display unit displays, based on the local response information, the local manipulation virtual object in the live broadcast room displayed in the first client.

On the basis of the multiple preceding technical solutions, the local response information determination unit is configured to determine the object action information and the object position information of the local manipulation virtual object corresponding to the local manipulation information based on the prebuilt local drive of the local manipulation virtual object and/or determine the scenario interaction information of the local manipulation virtual object corresponding to the local manipulation information based on the prebuilt scenario object.

On the basis of the multiple preceding technical solutions, the display apparatus of a live broadcast room also includes an object information push module.

The object information push module is configured to push the local response information of the local manipulation virtual object to the client corresponding to the remote manipulation virtual object belonging to the same live broadcast room as the local manipulation virtual object after the local response information of the local manipulation virtual object is determined according to the local manipulation information.

On the basis of the multiple preceding technical solutions, the display apparatus of a live broadcast room also includes a manipulation virtual object cancellation module.

The manipulation virtual object cancellation module is configured to cancel the display of the local manipulation virtual object in the live broadcast room when the first preset destruction condition for the local manipulation virtual object is detected to be satisfied and/or cancel the display of the remote manipulation virtual object in the live broadcast room when the second preset destruction condition for the remote manipulation virtual object is detected to be satisfied.

On the basis of the multiple preceding technical solutions, the live broadcast room trigger module 610 is configured to acquire the virtual reality video corresponding to the live broadcast room and display the virtual reality video in the live broadcast room.

The display apparatus of a live broadcast room provided by this embodiment of the present disclosure may execute the display method of a live broadcast room provided by any embodiment of the present disclosure and has functional modules and beneficial effects corresponding to the method executed.

It is to be noted that multiple units and modules included in the preceding apparatus are just divided according to functional logic, and the division is not limited to this, as long as the corresponding functions can be implemented. Additionally, the specific names of multiple functional units are just intended for distinguishing, and are not to limit the protection scope of embodiments of the present disclosure.

FIG. 7 is a diagram illustrating the structure of an electronic device according to an embodiment of the present disclosure. Referring to FIG. 7, FIG. 7 shows a diagram illustrating the structure of an electronic device 500 (such as the terminal device or server in FIG. 7) applicable to implementing the embodiments of the present disclosure. A terminal device in the embodiments of the present disclosure may include, but is not limited to, mobile terminals such as a mobile phone, a laptop, a digital broadcast receiver, a personal digital assistant (PDA), a PAD, a portable media player (PMP), and an in-vehicle terminal (such as an in-vehicle navigation terminal) and stationary terminals such as a digital television (TV) and a desktop computer. The electronic device shown in FIG. 7 is merely an example and is not intended to limit the function and usage scope of the embodiments of the present disclosure.

As shown in FIG. 7, the electronic device 500 may include a processing apparatus 501 (such as a central processing unit and a graphics processing unit). The processing apparatus 501 may perform multiple types of appropriate operations and processing based on a program stored in a read-only memory (ROM) 502 or a program loaded from a storage apparatus 508 to a random-access memory (RAM) 503. Multiple programs and data required for the operation of the electronic device 500 are also stored in the RAM 503. The processing apparatus 501, the ROM 502, and the RAM 503 are connected to each other through a bus 504. An input/output (I/O) interface 505 is also connected to the bus 504.

Generally, the following apparatus may be connected to the I/O interface 505: an input apparatus 506 such as a touch screen, a touch pad, a keyboard, a mouse, a camera, a microphone, an accelerometer, and a gyroscope; an output apparatus 507 such as a liquid crystal display (LCD), a speaker, and a vibrator; the storage apparatus 508 such as a magnetic tape and a hard disk; and a communication apparatus 509. The communication apparatus 509 may allow the electronic device 500 to perform wireless or wired communication with other devices to exchange data. Although FIG. 7 shows the electronic device 500 having multiple apparatuses, it is to be understood that not all of the apparatuses shown herein need to be implemented or present. Alternatively, more or fewer apparatuses may be implemented or present.

According to the embodiments of the present disclosure, the process described above with reference to the flowchart may be implemented as a computer software program. For example, the embodiments of the present disclosure include a computer program product. The computer program product includes a computer program carried in a non-transitory computer-readable medium. The computer program includes program codes for executing the method shown in the flowchart. In such an embodiment, the computer program may be downloaded from a network and installed through the communication apparatus 509, or may be installed from the storage apparatus 508, or may be installed from the ROM 502. When the computer program is executed by the processing apparatus 501, the preceding functions defined in the method of the embodiments of the present disclosure are executed.

The names of messages or information exchanged between multiple apparatuses in embodiments of the present disclosure are only for illustrative purposes and are not intended to limit the scope of such messages or information.

The electronic device provided in this embodiment of the present disclosure belongs to the same inventive concept as the display method of a live broadcast room provided in the preceding embodiments, and for the technical details not described in detail in this embodiment, reference can be made to the preceding embodiments, and the embodiment has the same beneficial effects as the preceding embodiments.

An embodiment of the present disclosure provides a computer storage medium storing a computer program. When executing the computer program, a processor performs the display method of a live broadcast room provided in the preceding embodiments.

It is to be noted that the preceding computer-readable medium in the present disclosure may be a computer-readable signal medium, or a computer-readable storage medium, or any combination thereof. The computer-readable storage medium, for example, may be, but is not limited to, an electronic, magnetic, optical, electromagnetic, infrared or semiconductor system, apparatus or device, or any combination thereof. More specific examples of the computer-readable storage medium may include, but are not limited to, an electrical connection with one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms and includes, and is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program used by or in conjunction with an instruction execution system, apparatus, or device. The program codes included on the computer-readable medium may be transmitted via any appropriate medium which includes, but is not limited to, a wire, an optical cable, a radio frequency (RF), or any appropriate combination thereof.

In some embodiments, clients and servers may communicate using any currently known or future developed network protocol, such as HTTP (HyperText Transfer Protocol), and may be interconnected with any form or medium of digital data communication (such as a communication network). Examples of the communication network include a local area network (LAN), a wide area networks (WAN), an internet (such as the Internet), and a peer-to-peer network (such as an Ad-Hoc network), as well as any currently known or future developed network.

The preceding computer-readable medium may be included in the preceding electronic device or may exist alone without being assembled into the electronic device.

The preceding computer-readable medium carries one or more programs. When the one or more programs are executed by the electronic device, the electronic device is configured to

The preceding computer-readable medium carries one or more programs. When the one or more programs are executed by the electronic device, the electronic device is configured to display the live broadcast room in the first client in response to the viewing trigger operation for the live broadcast room of the first client and display the remote manipulation virtual object in the live broadcast room displayed in the first client in presence of the remote manipulation virtual object created by the second client for the live broadcast room.

Alternatively, the preceding computer-readable medium carries one or more programs. When the one or more programs are executed by the electronic device, the electronic device is configured to display the live broadcast room in the first client in response to the viewing trigger operation for the live broadcast room of the first client and display the remote manipulation virtual object in the live broadcast room displayed in the first client in presence of the remote manipulation virtual object created by the second client for the live broadcast room.

Computer program codes for performing the operations in the present disclosure may be written in one or more programming languages or combination thereof. The preceding one or more programming languages include, but are not limited to, object-oriented programming languages such as Java, Smalltalk, and C++, as well as conventional procedural programming languages such as C or similar programming languages. Program codes may be executed entirely on a user computer, partly on a user computer, as a stand-alone software package, partly on a user computer and partly on a remote computer, or entirely on a remote computer or a server. In the case relate to the remote computer, the remote computer may be connected to the user computer via any kind of network including a local area network (LAN) or a wide area network (WAN), or may be connected to an external computer (for example, via the Internet through an Internet service provider).

The flowcharts and block diagrams in the drawings show the possible architecture, function, and operation of the system, method, and computer program product according to multiple embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a special-purpose hardware-based system which executes specified functions or operations, or a combination of special-purpose hardware and computer instructions.

The units involved in the embodiments of the present disclosure may be implemented by software or hardware. The names of the units in some cases do not constitute a limitation on the units themselves. For example, a first acquisition unit may also be described as "a unit for acquiring at least two Internet protocol addresses".

The functions described above herein may be executed, at least partially, by one or more hardware logic components. For example, and without limitations, example types of hardware logic components that may be used include: a field-programmable gate array (FPGA), an application-specific integrated circuit (ASIC), an application-specific standard product (ASSP), system on a chip (SOC), a complex programmable logic device (CPLD) and the like.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

According to one or more embodiments of the present disclosure, [example one] provides a display method of a live broadcast room. The method includes the steps below.

The live broadcast room is displayed in the first client in response to the viewing trigger operation for the live broadcast room of the first client.

The remote manipulation virtual object is displayed in the live broadcast room displayed in the first client in the presence of the remote manipulation virtual object created by the second client for the live broadcast room.

According to one or more embodiments of the present disclosure, [example two] provides a display method of a live broadcast room. The method includes the steps below.

For example, the remote manipulation virtual object is displayed in the live broadcast room displayed in the first client in the manners below.

The remote response information of the remote manipulation virtual object is acquired, the remote manipulation virtual object is rendered based on the remote response information, and the rendered remote manipulation virtual object is displayed in the live broadcast room displayed in the first client.

The remote response information is determined based on the remote manipulation information for the remote control point corresponding to the remote manipulation virtual object.

According to one or more embodiments of the present disclosure, [example three] provides a display method of a live broadcast room. The method includes the steps below.

For example, the remote response information of the remote manipulation virtual object is acquired in the manners below.

The remote response information of the remote manipulation virtual object pushed by the second client is received, and the remote response information of the remote manipulation virtual object is buffered to the target buffer space.

If the preset information acquisition condition is satisfied, the local response information is acquired from the target buffer space.

According to one or more embodiments of the present disclosure, [example four] provides a display method of a live broadcast room. The method includes the steps below.

For example, the remote response information of the remote manipulation virtual object is acquired in the manners below.

The information acquisition time is determined according to the information update frequency of the remote response information and the image update frequency of the live broadcast image in the live broadcast room.

The remote response information of the remote manipulation virtual object is acquired according to the information acquisition time.

According to one or more embodiments of the present disclosure, [example five] provides a display method of a live broadcast room. The method includes the steps below.

For example, the information acquisition time is determined according to the information update frequency of the remote response information and the image update frequency of the live broadcast image in the live broadcast room in the manners below.

In the case where the information update frequency of the remote response information is less than the image update frequency of the live broadcast image of the live broadcast room, the delay time is determined according to the information update cycle of the remote response information, and the information acquisition time is determined according to the delay time.

According to one or more embodiments of the present disclosure, [example six] provides a display method of a live broadcast room. The method includes the steps below.

For example, the remote response information of the remote manipulation virtual object is acquired, the remote manipulation virtual object is rendered based on the remote response information, and the rendered remote manipulation virtual object is displayed in the live broadcast room displayed in the first client in the manners below.

In the case where the information update frequency of the remote response information is less than the image update frequency of the live broadcast image of the live broadcast room, two adjacent frames of the remote response information which are adjacent in the information generation time are acquired from at least two frames of the remote response information of the remote manipulation virtual object.

Interpolation processing is performed according to the two adjacent frames of the remote response information to obtain the interpolation response information located between the two frames of the remote response information.

The remote manipulation virtual object is rendered based on the remote response information and the interpolation response information and the rendered remote manipulation virtual object is displayed in the live broadcast room displayed in the first client.

According to one or more embodiments of the present disclosure, [example seven] provides a display method of a live broadcast room. The method includes the steps below.

For example, the method also includes the steps below.

The creation trigger operation for the live broadcast room of the first client is received, where the creation trigger operation is used for creating the local manipulation virtual object. The local manipulation virtual object is created. The local manipulation virtual object is displayed in the live broadcast room displayed in the first client.

According to one or more embodiments of the present disclosure, [example eight] provides a display method of a live broadcast room. The method includes the steps below.

For example, the local manipulation virtual object is displayed in the live broadcast room displayed in the first client in the manners below.

The local manipulation information of the manipulation point of the local manipulation virtual object is acquired, and the local response information of the local manipulation virtual object is determined according to the local manipulation information. The local response information includes at least one of object action information, object position information, or scenario interaction information.

The local manipulation virtual object is displayed in the live broadcast room displayed in the first client based on the local response information.

According to one or more embodiments of the present disclosure, [example nine] provides a display method of a live broadcast room. The method includes the steps below.

For example, the local response information of the local manipulation virtual object is determined in the manners below according to the local manipulation information.

The object action information and the object position information of the local manipulation virtual object corresponding to the local manipulation information are determined based on the prebuilt local drive of the local manipulation virtual object.

Moreover/Alternatively, the scenario interaction information of the local manipulation virtual object corresponding to the local manipulation information is determined based on the prebuilt scenario object.

According to one or more embodiments of the present disclosure, [example ten] provides a display method of a live broadcast room. The method includes the steps below.

For example, after the local response information of the local manipulation virtual object is determined according to the local manipulation information, the method also includes the steps below.

The local response information of the local manipulation virtual object is pushed to the client corresponding to the remote manipulation virtual object belonging to the same live broadcast room as the local manipulation virtual object.

According to one or more embodiments of the present disclosure, [example eleven] provides a display method of a live broadcast room. The method includes the steps below.

For example, the method also includes the steps below.

When the first preset destruction condition for the local manipulation virtual object is detected to be satisfied, the display of the local manipulation virtual object is cancelled in the live broadcast room.

Moreover/Alternatively, when the second preset destruction condition for the remote manipulation virtual object is detected to be satisfied, the display of the remote manipulation virtual object is cancelled in the live broadcast room.

According to one or more embodiments of the present disclosure, [example twelve] provides a display method of a live broadcast room. The method includes the steps below.

For example, the live broadcast room is displayed in the first client in the manners below.

The virtual reality video corresponding to the live broadcast room is acquired, and the virtual reality video is displayed in the live broadcast room.

According to one or more embodiments of the present disclosure, [example thirteen] provides display apparatus of a live broadcast room. The apparatus includes a live broadcast room trigger module and a live broadcast room display module.

The live broadcast room trigger module is configured to display the live broadcast room in the first client in response to the viewing trigger operation for the live broadcast room of the first client.

The live broadcast room display module is configured to display the remote manipulation virtual object in the live broadcast room displayed in the first client in the presence of the remote manipulation virtual object created by the second client for the live broadcast room.

In addition, although multiple operations are depicted in a particular order, this should not be construed as requiring that such operations should be performed in the particular order shown or in a sequential order. In certain circumstances, multitasking and parallel processing may be advantageous. Similarly, although specific implementation details are included in the above discussion, these should not be construed as limiting the scope of the present disclosure. Some features described in the context of separate embodiments may also be implemented in combination in a single embodiment. Conversely, multiple features described in the context of a single embodiment may also be implemented in multiple embodiments, individually, or in any suitable sub-combination.

## Claims

1. A display method of a live broadcast room, comprising:
displaying the live broadcast room in a first client in response to a viewing trigger operation for the live broadcast room of the first client; and
displaying a remote manipulation virtual object in the live broadcast room displayed in the first client in response to determining that the remote manipulation virtual object created by a second client for the live broadcast room exists.

2. The method of claim 1, wherein displaying the remote manipulation virtual object in the live broadcast room displayed in the first client comprises:
acquiring remote response information of the remote manipulation virtual object, rendering the remote manipulation virtual object based on the remote response information, and displaying the rendered remote manipulation virtual object in the live broadcast room displayed in the first client,
wherein the remote response information is determined according to remote manipulation information of a remote control point corresponding to the remote manipulation virtual object.

3. The method of claim 2, wherein acquiring the remote response information of the remote manipulation virtual object comprises:
receiving the remote response information of the remote manipulation virtual object pushed by the second client and buffering the remote response information of the remote manipulation virtual object in a target buffer space; and
in response to determining that a preset information acquisition condition is satisfied, acquiring the remote response information from the target buffer space.

4. The method of claim 2, wherein acquiring the remote response information of the remote manipulation virtual object comprises:
determining information acquisition time according to an information update frequency of the remote response information and an image update frequency of a live broadcast image in the live broadcast room; and
acquiring the remote response information of the remote manipulation virtual object according to the information acquisition time.

5. The method of claim 4, wherein determining the information acquisition time according to the information update frequency of the remote response information and the image update frequency of the live broadcast image in the live broadcast room comprises:
in response to determining that the information update frequency of the remote response information is less than the image update frequency of the live broadcast image in the live broadcast room, determining a delay time according to an information update cycle of the remote response information and determining the information acquisition time according to the delay time.

6. The method of claim 2, wherein acquiring the remote response information of the remote manipulation virtual object, rendering the remote manipulation virtual object based on the remote response information, and displaying the rendered remote manipulation virtual object in the live broadcast room displayed in the first client comprise:
in response to determining that an information update frequency of the remote response information is less than an image update frequency of a live broadcast image in the live broadcast room, acquiring, from at least two frames of the remote response information of the remote manipulation virtual object, two adjacent frames of the remote response information which are adjacent in information generation time;
performing interpolation processing according to the two adjacent frames of the remote response information to obtain interpolation response information between the two adjacent frames of the remote response information; and
rendering the remote manipulation virtual object based on the remote response information and the interpolation response information and display the rendered remote manipulation virtual object in the live broadcast room displayed in the first client.

7. The method of claim 1, further comprising:
receiving a creation trigger operation for the live broadcast room of the first client, wherein the creation trigger operation is used for creating a local manipulation virtual object;
creating the local manipulation virtual object according to the creation trigger operation; and
displaying the local manipulation virtual object in the live broadcast room displayed in the first client.

8. The method of claim 7, wherein displaying the local manipulation virtual object in the live broadcast room displayed in the first client comprises:
acquiring local manipulation information of a manipulation point of the local manipulation virtual object and determining local response information of the local manipulation virtual object according to the local manipulation information, wherein the local response information comprises one of object action information, object position information, or scenario interaction information; and
according to the local response information, displaying the local manipulation virtual object in the live broadcast room displayed in the first client.

9. The method of claim 8, wherein determining the local response information of the local manipulation virtual object according to the local manipulation information comprises at least one of the following:
according to a prebuilt local drive of the local manipulation virtual object, determining the object action information and the object position information of the local manipulation virtual object corresponding to the local manipulation information; or
according to a prebuilt scenario object, determining the scenario interaction information of the local manipulation virtual object corresponding to the local manipulation information.

10. The method of claim 8, after determining the local response information of the local manipulation virtual object according to the local manipulation information, further comprising:
pushing at least one of the object action information or the object position information of the local manipulation virtual object to a client corresponding to the remote manipulation virtual object belonging to the same live broadcast room as the local manipulation virtual object.

11. The method of claim 7, further comprising at least one of the following:
canceling display of the local manipulation virtual object in the live broadcast room in response to detecting that a first preset destruction condition for the local manipulation virtual object is satisfied; or
canceling display of the remote manipulation virtual object in the live broadcast room in response to detecting that a second preset destruction condition for the remote manipulation virtual object is satisfied.

12. The method of claim 1, wherein displaying the live broadcast room in the first client comprises:
acquiring a virtual reality video corresponding to the live broadcast room and displaying the virtual reality video in the live broadcast room.

13. A display apparatus of a live broadcast room, comprising:
a live broadcast room trigger module configured to display the live broadcast room in a first client in response to a viewing trigger operation for the live broadcast room of the first client; and
a live broadcast room display module configured to display a remote manipulation virtual object in the live broadcast room displayed in the first client in response to determining that the remote manipulation virtual object created by a second client for the live broadcast room exists.

14. An electronic device, comprising:
one or more processors, and
a storage apparatus configured to store one or more programs,
wherein when executing the one or more programs, the one or more processors is enabled to perform the display method of a live broadcast room according to any one of claims 1 to 12.

15. A storage medium comprising computer-executable instructions, wherein when executing the computer-executable instructions, a computer processor is configured to execute the display method of a live broadcast room according to any one of claims 1 to 12.
